# EUROPÄISCHE PATENTSCHRIFT

(11) **EP 2 842 291 B1**
(45) Veröffentlichungstag und Bekanntmachung des Hinweises auf die Patenterteilung: **18.10.2017**
(21) Anmeldenummer: 13733984.2
(22) Anmeldetag: 21.06.2013
(51) Int. Cl.: H04L 9/32, H04L 29/06, H04L 29/12, H04W 12/06, H04W 88/04

(54) **AUTHENTIFIZIERUNG EINES ERSTEN GERÄTES DURCH EINE VERMITTLUNGSSTELLE**
AUTHENTICATION OF A FIRST DEVICE BY A SWITCHING CENTRE
AUTHENTIFICATION D'UN PREMIER APPAREIL AU MOYEN D'UN CENTRE DE COMMUTATION

(30) Priorität: 27.08.2012 DE 102012215167
(43) Veröffentlichungstag der Anmeldung: 04.03.2015
(73) Patentinhaber: Siemens Aktiengesellschaft, 80333 München (DE)
(72) Erfinder: FISCHER, Kai, 85598 Baldham (DE); FRIES, Steffen, 85598 Baldham (DE); GESSNER, Jürgen, 85661 Forstinning (DE)
(86) Internationale Anmeldenummer: PCT/EP2013/062970
(87) Internationale Veröffentlichungsnummer: WO 2014/032828

(56) Entgegenhaltungen:
- EP-A1- 2 075 959
- WO-A1-2007/004921
- PINGPING LIN ET AL: "A Novel SeND Based Source Address Validation Mechanism (SAVM-SeND)", APPLICATIONS AND THE INTERNET, 2009. SAINT '09. NINTH ANNUAL INTERNATIONAL SYMPOSIUM ON, IEEE, PISCATAWAY, NJ, USA, 20. Juli 2009 (2009-07-20), Seiten 149-152, XP031524660, ISBN: 978-1-4244-4776-3

## Beschreibung

Die Erfindung betrifft ein Verfahren, ein erstes Gerät und eine Vermittlungsstelle zur Authentifizierung eines ersten Gerätes durch eine Vermittlungsstelle innerhalb eines Netzwerkes.

Um einen Zugriff auf ein physikalisches Netzwerk zu erhalten, werden Geräte, die Zugriff erhalten möchten, durch eine übergeordnete Instanz authentifiziert. Die Authentifizierung geschieht häufig mit Hilfe des Standards IEEE 802.1X, wobei die Authentifizierung in der Regel durch einen IEEE 802.1X-fähigen Switch, an dessen Port die Geräte angeschlossen sind, erfolgt. Die Identifikation der Geräte erfolgt in diesem Fall durch eine MAC-Adresse (Media Access Control-Adresse). Sobald ein Switch eine unbekannte MAC-Adresse an einem Port detektiert oder eine physikalische Verbindung unterbrochen wurde, muss sich das dazugehörige Gerät erneut authentisieren, beziehungsweise muss das Gerät durch den Switch erneut authentifiziert werden.

Zunehmend werden nicht nur im Serverumfeld Virtualisierungslösungen eingesetzt, sondern auch im Clientbereich. Dies führt dazu, dass ein Clientgerät zusätzlich zu den physikalischen Netzwerkschnittstellen auch über virtuelle Schnittstellen mit zusätzlichen MAC-Adressen verfügt.

Aus dem Stand der Technik sind IEEE 802.1X-fähige Switche bekannt, die eine sogenannte Multihost-Authentification unterstützen. Hierbei wird nur der erste Zugriff authentifiziert. Alle anderen Geräte beziehungsweise virtuellen Netzwerkschnittstellen, die an demselben Port des Switches angeschlossen sind, müssen sich nicht zusätzlich authentisieren.

Aus dem Stand der Technik sind ferner IEEE 802.1X-fähige Switche bekannt, die eine sogenannte Multi-Domain-Authentification unterstützen. Hierbei muss sich jedes Gerät beziehungsweise jede Netzwerkschnittstelle - auch virtuelle Netzwerkschnittstellen - erneut authentisieren, da dem Switch virtuelle MAC-Adressen, die auf dem physikalischen Netzwerk zu sehen sind, unbekannt sind.

Ähnliches gilt im Automatisierungsumfeld: Profinet-Geräte haben neben einer MAC-Adresse pro Netzwerkschnittstelle zusätzlich eine gerätespezifische MAC-Adresse.

Die EP 2 075 959 A1 beschreibt ein Verfahren, in dem ein Endgerät parallel Zugriff zu mehreren Netzwerken über eine einzige Netz-Interfacekarte aufbauen kann. Dazu wird dem Endgerät eine Mehrzahl von virtuellen MAC-Adressen zugeordnet, die einer Mehrzahl von virtuellen MAC-Geräten entsprechen. Jedes dieser virtuellen MAC-Geräte kann nun zu einer Netz-Infrastruktur eine Verbindung mit den entsprechenden Protokollen aufbauen, in dem sich jedes virtuelle MAC-Gerät separat bei einem Zugangsknoten mit seiner virtuellen MAC Adresse und der MAC Adresse des physikalischen Geräts authentifiziert.

Die WO 2007 004921 A1 beschreibt einen Zugangsknoten für die drahtlose Kommunikation durch Gateway-Vorrichtungen mit Endgeräten, wobei der Zugangsknoten eine VMAC-Handhabungseinheit zum Abbilden einer originalen Endgeräte-Anschlusssteuerungs- bzw. MAC-Adresse eines Endgeräts auf eine eindeutige, lokal administrierte virtuelle MAC-Adresse für das Endgerät enthält und ein entsprechendes Verfahren zum Abbilden einer originalen MAC- Adresse eines Endgerätes auf eine eindeutig lokal administrierte virtuelle MAC-Adresse. Weiterhin wird konkret eine allgemeine Methode mit Hilfe eines umrissenen Adressenformats offenbart, die 16 Bits dafür liefert, einen Endbenutzer und die zugehörige MAC-Adressen zu identifizieren. Dabei wird das Konzept von logischen Ports verwendet, um eindeutig die Endbenutzerschnittstelle zu identifizieren, die mit der VMAC Adresse verwandt ist.

Im Artikel Pingping Lin et Al: "A Novel SeND Based Source Address Validation Mechanism (SAVMSeND)", Applications and the Internet, 2009. Saint ,09. Ninth Annual International Symposium On, IEEE, Piscataway, NJ, USA, 20. Juli 2009 (2009-07-20), Seiten 149-152, XP031524660 wird eine Lösung für die Lieferung einer Quelladressbetätigung mit Hilfe eines Sendeprotokolls beschrieben. Alle Hosts benutzen dabei das Send-Protokoll IPv6. Ziel ist es, einen Mechanismus für die Steuerung der Quelladressen zu liefern. Jeder Host hat mehrere Schnittstellen, jedes Interface mehrere MAC-Adressen. Der beschriebene SAVMSend- Mechanismus nimmt den öffentlichen Schlüssel als zusätzliche Identität für eine MAC-Adresse oder einen Host. Mit dem öffentlichen Schlüssel erfolgt die automatische Beurteilung, ob die MAC-Adressen die beabsichtigen, die gleiche IP- Adresse zu verwenden, vom gleichen Host sind.

Vor diesem Hintergrund besteht die Aufgabe der vorliegenden Erfindung darin, eine Möglichkeit für einen vereinfachten Authentifizierungsprozess innerhalb von Netzwerken zu schaffen, wobei die Anforderungen, die durch den Einsatz zusätzlicher Netzwerkinterfaces entstehen, berücksichtigt werden.

Diese Aufgabe wird durch ein Verfahren, ein erstes Gerät und eine Vermittlungsstelle gemäß den in den unabhängigen Ansprüchen angegebenen Merkmalen gelöst.

Vorteilhafte Ausführungsformen und Weiterbildungen sind in den Unteransprüchen angegeben.

Die im Folgenden genannten Vorteile müssen nicht notwendigerweise durch die Gegenstände der unabhängigen Patentansprüche erzielt werden. Vielmehr kann es sich hier auch um Vorteile handeln, welche lediglich durch einzelne Ausführungsformen oder Weiterbildungen erzielt werden.

Erfindungsgemäß weist ein Verfahren zur Authentifizierung eines ersten Gerätes durch eine Vermittlungsstelle innerhalb eines Netzwerkes folgende Schritte auf:

Das erste Gerät übermittelt in einem Identitätsbereich einer Datenstruktur einen ersten Identifikator an die Vermittlungsstelle. Das erste Gerät übermittelt in einem erweiterten Identitätsbereich der Datenstruktur mindestens einen zusätzlichen Identifikator an die Vermittlungsstelle. Die Vermittlungsstelle authentifiziert das erste Gerät in Abhängigkeit von dem übermittelten ersten Identifikator und dem übermittelten zusätzlichen Identifikator.

Geräte, die gemäß dem beschriebenen Verfahren durch die Vermittlungsstelle authentifiziert werden, geben ergänzend an, für welche Netzwerkschnittstellen die Authentifizierung zusätzlich erfolgen soll. Damit muss sich das erste Gerät innerhalb des Netzwerkes nur einmal authentisieren auf Basis seiner physikalischen Netzwerkschnittstelle. Gleichzeitig wird durch das erste Gerät angegeben, für welche zusätzlichen Netzwerkinterfaces die Authentifizierung gleichfalls erfolgen soll.

Somit ist dennoch gewährleistet, dass andere Geräte oder deren virtuelle Netzwerkinterfaces, die an denselben Port des Switches angeschlossen sind, sich wie gewünscht authentisieren müssen. Die Authentifizierung erfolgt demnach je Gerät in einem einmaligen Authentifizierungsprozess, in dem der Zugriff auf ein Netzwerk von mehreren Netzwerkschnittstellen aus autorisiert wird.

Gemäß einer Ausführungsform übermittelt das erste Gerät als ersten Identifikator eine zu einer physikalischen Netzwerkschnittstelle gehörende erste Media-Access-Control-Adresse und als zusätzlichen Identifikator eine zu einer virtuellen Netzwerkschnittstelle gehörende zusätzliche Media-Access-Control-Adresse oder eine zur physikalischen Netzwerkschnittstelle gehörende zweite Media-Access-Control-Adresse.

Die Netzwerkschnittstellen werden dabei durch die MAC-Adressen spezifiziert. Somit kann sowohl eine zu einer virtuellen Netzwerkschnittstelle gehörende MAC-Adresse als auch eine zweite MAC-Adresse, die einer physikalischen Netzwerkschnittstelle zusätzlich zur ersten MAC-Adresse zugeordnet ist, in den Authentifizierungsprozess mit eingeschlossen werden.

Gemäß einer Ausführungsform ist die Datenstruktur als ein Zertifikat ausgestaltet, in welchem mindestens eine zusätzliche Media-Access-Control-Adresse im erweiterten Identitätsbereich mit Hilfe eines Platzhalters angegeben wird.

So kann in einem Zertifikat mittels eines Eintrages mit Platzhalter ein gewisser Bereich von Adressen angegeben werden, für den die Authentifizierung durchgeführt werden soll. So kann die Identifizierung beispielsweise für alle Adressen einer bestimmten Endung erfolgen, wenn über den Einsatz eines Platzhalters im vorderen Teil der Adresse der vordere Teil der Adresse nicht spezifiziert wird. Es können aber auch beispielsweise die ersten drei von insgesamt sechs Bytes als Herstelleridentifikator fest bleiben und die weiteren vom Hersteller frei wählbaren drei Bytes für zusätzliche MAC-Adressen variiert werden. Dabei kann insbesondere das letzte Byte eine Geräteversion enthalten und über einen Platzhalter eine Vielzahl von Geräteversionen umfasst sein. Hier ist ein Platzhalter denkbar, der Geräte ab einem bestimmten Baujahr umfasst.

Gemäß einer Ausführungsform wird mindestens eine zusätzliche Media-Access-Control-Adresse dadurch erzeugt, dass ein Herstelleridentifikator innerhalb der Media-Access-Control-Adresse mittels einer Maske ersetzt wird.

Es ist eine MAC-Adress-Struktur denkbar, bei der virtuelle MAC-Adressen durch das Überschreiben der Herstelleridentifikationsnummer in den ersten drei der sechs Bytes der MAC-Adresse erzeugt werden. Die letzten drei Bytes sind spezifisch für die physikalische Netzwerkkarte und werden als Basis für die Identifizierung genutzt. Mittels einer Maske sind während der Konfiguration einzelne Bytes der MAC-Adresse, insbesondere die Herstellerbytes, überschreibbar.

Gemäß einer Weiterbildung ist die Datenstruktur als Zertifikat ausgestaltet, in welchem im erweiterten Identitätsbereich als zusätzlicher Identifikator eine Internetprotokolladresse übermittelt wird, welche zu einer zusätzlichen Media-Access-Control-Adresse korrespondiert.

Sollte eine MAC-Adresse Bestandteil einer Internetprotocol Version 6-Adresse (IPv6-Adresse) sein, kann als zusätzlicher Identifikator für jede zusätzliche virtuelle Netzwerkschnittstelle eine IP-Adresse im Zertifikat angegeben werden.

Gemäß einer Weiterbildung ist die Datenstruktur als ein Gerätezertifikat oder ein Attributzertifikat ausgebildet.

Durch den Einsatz eines Gerätezertifikats, insbesondere eines X.509-Gerätezertifikats, nach dem Standard RFC 5280, können in einem erweiterten Identifikator alle alternativen Identitäten, die als zusätzlicher Identifikator übermittelt werden, angegeben werden, wobei eine Zuordnung zu dem Gerät, das sich mittels des Gerätezertifikats authentisiert, unmittelbar gegeben ist.

Wird der zusätzliche Identifikator in dem erweiterten Identitätsbereich eines Attributzertifikats übermittelt, so kann während der Produktion des Gerätes ein Zertifikat ausgestellt werden, in welchem die MAC-Adresse hinterlegt ist und später während des Betriebs des Gerätes diese MAC-Adresse um weitere virtuelle Adressen ergänzt werden, abhängig davon, ob und wie viele benötigt werden. Damit lässt sich Produktion und späterer Einsatz gut trennen.

Gemäß einer Weiterbildung ist die Datenstruktur als ein Gerätezertifikat oder ein Attributzertifikat ausgebildet, das durch die Signatur einer vertrauenswürdigen Zertifizierungsinstanz vor Manipulationen geschützt ist.

Somit ist ein hoher Sicherheitsstandard bei der Authentifizierung virtueller Netzwerkschnittstellen oder physikalischer Netzwerkschnittstellen und deren jeweiligen Adressen gewährleistet.

Gemäß einer weiteren Ausführungsform wird mindestens ein zweites Gerät innerhalb des Netzwerkes in den Verfahrensschritten gemäß einer der oben genannten Ausführungsformen oder Weiterbildungen durch die Vermittlungsstelle authentifiziert.

Existieren zwei oder mehrere Geräte in einem Netzwerk, die sich zum Zwecke des Zugriffs auf das Netzwerk authentisieren, so erfolgt das Authentifizierungsverfahren für jedes Gerät innerhalb des Netzwerkes separat. Ein Authentifizierungsverfahren wird je physikalischem Gerät oder je physikalischer Netzwerkschnittstelle durchgeführt.

Gemäß einer Weiterbildung wird nach erfolgreicher Authentifizierung des ersten Geräts durch die Vermittlungsstelle dem ersten Gerät ein Zugriff auf das Netzwerk durch die Vermittlungsstelle gewährt. Damit ist sichergestellt, dass ein Zugriff eines Gerätes über eine Netzwerkschnittstelle auf das Netzwerk nur dann möglich ist, wenn zuvor das Authentifizierungsverfahren gemäß einer der oben beschriebenen Ausführungsformen oder Weiterbildungen durchlaufen wurde und das Gerät authentifiziert wurde.

Gemäß einer Weiterbildung wird dem zweiten Gerät nach erfolgreicher Authentifizierung des zweiten Gerätes durch die Vermittlungsstelle ein Zugriff auf das Netzwerk durch die Vermittlungsstelle gewährt.

Somit erfolgt der Schritt der Autorisierung, der dem sich autorisierenden Gerät den Zugriff auf das Netzwerk gewährt, je Gerät. Damit wird einem Gerät in einem einmaligen Authentifizierungsprozess der Zugriff auf das Netzwerk über mehrere Netzwerkinterfaces oder Adressen gestattet, ohne dass eine Mehrfachauthentifizierung nötig ist. Dennoch erfolgt eine separate Authentifizierung und entsprechend eine separate Autorisierung der Geräte, falls diese hintereinander geschaltet sind, so dass Sicherheitsstandards gewahrt werden können, die eine separate Authentifizierung und Autorisierung je Gerät vorschreiben.

Gemäß einem weiteren Aspekt der Erfindung wird ein erstes Gerät geschaffen zur Authentifizierung innerhalb eines Netzwerks, wobei das erste Gerät in einem Identitätsbereich einer Datenstruktur einen ersten Identifikator an eine Vermittlungsstelle vermittelt, und wobei das erste Gerät in einem erweiterten Identitätsbereich der Datenstruktur mindestens einen zusätzlichen Identifikator an die Vermittlungsstelle übermittelt.

Gemäß einem weiteren Aspekt der Erfindung wird eine Vermittlungsstelle geschaffen, wobei die Vermittlungsstelle ein erstes Gerät in Abhängigkeit von einem vom ersten Gerät übermittelten ersten Identifikator und mindestens einem vom ersten Gerät übermittelten zusätzlichen Identifikator authentisiert.

Die Erfindung wird nachfolgend mit Ausführungsbeispielen anhand der Figuren näher erläutert. Es zeigen:
- Figur 1: eine schematische Anordnung der wesentlichen Komponenten und Verfahrensschritte zur Authentifizierung gemäß einem Ausführungsbeispiel des erfindungsgemäßen Verfahrens;
- Figur 2: eine schematische Darstellung einer Datenstruktur gemäß einem Ausführungsbeispiel der Erfindung.

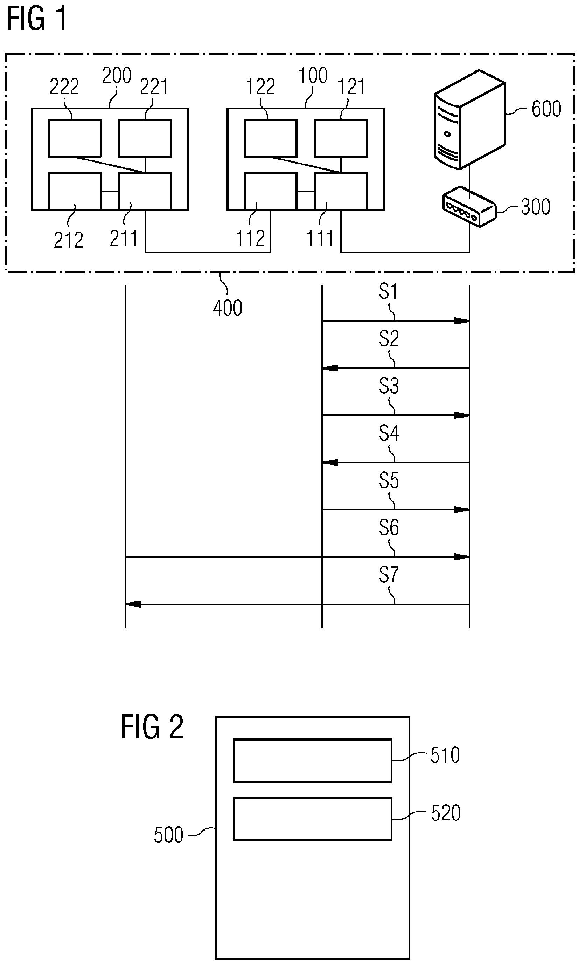

Figur 1 zeigt ein Ausführungsbeispiel der Erfindung, wobei in einem Netzwerk 400 einer industriellen Automatisierungsanlage ein erstes Gerät 100 und ein zweites Gerät 200 hintereinander geschaltet und an einen gemeinsamen Port einer Vermittlungsstelle, die in diesem Beispiel durch einen Switch 300 realisiert ist, angeschlossen sind. In einer solchen Linientopologie ist es gewünscht, dass sowohl das erste Gerät 100 als auch das zweite Gerät 200 separat authentifiziert werden.

In einem ersten Schritt S1 versucht das erste Gerät 100 mit einer ersten Media-Access-Control-Adresse (MAC-Adresse) 111, die eine physikalische Netzwerkschnittstelle des ersten Gerätes 100 spezifiziert, auf das Netzwerk 400 zuzugreifen. Die erste MAC-Adresse 111 wurde noch nicht am Switch 300 authentifiziert und der Switch 300 sendet in einem zweiten Schritt S2 eine Anforderung zur Authentisierung. Dazu übermittelt das erste Gerät 100 in einem dritten Schritt S3 in einem Identitätsbereich 510 einer Datenstruktur, die hier durch ein Zertifikat 500 realisiert ist und schematisch in Figur 2 gezeigt ist, einen ersten Identifikator an den Switch 300. Außerdem gibt das erste Gerät 100 in einem erweiterten Identitätsbereich 520 drei zusätzliche Identifikatoren 112, 121, 122 an.

Eine MAC-Adresse zu einer physikalischen Netzwerkschnittstelle kann in drei Adressbereiche unterteilt werden, wobei ein vorderer Adressbereich für die Kennung des Herstellers und des Gerätes steht, ein mittlerer die Netzwerkschnittstelle als physikalische Netzwerkschnittstelle kennzeichnet und ein hinterer Adressbereich die verschiedenen MAC-Adressen je physikalischer Netzwerkschnittstelle und je Gerät jeweils kennzeichnet.

Eine virtuelle Netzwerkschnittstelle besitzt entsprechend einen mittleren Adressbereich mit Kennzeichnung als virtuelle Netzwerkschnittstelle, der vordere Adressbereich steht wiederum für den Hersteller und der hintere Adressbereich kennzeichnet wiederum die jeweilige virtuelle Netzwerkschnittstelle je Gerät.

Eine MAC-Adresse der Form
00-30-05-5A-DB-A0
besteht aus sechs Bytes, wobei die ersten drei Bytes als Herstellerbytes dienen und unter anderem die Herstelleridentifikationsnummer beinhalten. Die folgenden zwei Bytes beinhalten die Geräteidentifikationsnummer und können insbesondere die unterscheidende Kennzeichnung zwischen einer einer virtuellen Netzwerkschnittstelle zugeordneten MAC-Adresse und einer einer physikalischen Netzwerkschnittstelle zugeordneten MAC-Adresse aufweisen. Das letzte Byte kennzeichnet schließlich über eine enthaltenen Versionsnummer oder ein Gerätebaujahr die Netzwerkschnittstelle, das heißt je vorhandener Netzwerkschnittstelle, virtuell oder physikalisch, existiert eine kennzeichnende Endung.

Das erste Gerät übermittelt in dem Zertifikat 500 neben dem ersten Identifikator 111 ferner die zusätzlichen Identifikatoren 112, 121 und 122. Das erste Gerät verfügt über eine zweite MAC-Adresse 112, die zur physikalischen Netzwerkschnittstelle gehört, und über zwei zusätzliche MAC-Adressen 121, 122, die zu zwei virtuellen Netzwerkschnittstellen gehören.

In einem vierten Schritt S4 verifiziert der Switch 300 das vom ersten Gerät 100 vorgelegte Zertifikat 500 mit Hilfe eines Authentifizierungsservers 600 und authentifiziert das erste Gerät nach erfolgreicher Verifizierung. Ein Zugriff auf das Netzwerk 400 wird in einem fünften Schritt S5 dem ersten Gerät 100 nun von allen Netzwerkschnittstellen und mit allen MAC-Adressen gewährt.

Versucht nun ein zweites Gerät 200 über einen als erste MAC-Adresse Zweitgerät ausgebildeten ersten Identifikator Zweitgerät 211, der zu einer physikalischen Netzwerkschnittstelle des zweiten Gerätes 200 gehört, in einem sechsten Schritt S6 auf das Netzwerk zuzugreifen, so sendet der Switch 300 in einem siebten Schritt S7 wiederum eine Anforderung zur Authentisierung, da diese MAC-Adresse noch nicht vom Switch authentifiziert wurde.

Der Authentifizierungsvorgang gemäß dem dritten Schritt 3, dem vierten Schritt S4 und dem fünften Schritt 5, läuft nun analog für das zweite Gerät 200 ab.

Damit ist eine wichtige Anforderung an einen beschriebenen Switch 300, der für ein Netzwerk in einer Automatisierungsanlage verwendet wird, erfüllt, nämlich dass bei mehreren in Reihe geschalteten Geräten jedes Gerät einzeln authentifiziert wird.

Figur 2 zeigt eine schematische Darstellung einer Datenstruktur 500 mit einem Identitätsbereich 510 und einem erweiterten Identitätsbereich 520. Im beschriebenen Ausführungsbeispiel erfolgt die Authentifizierung durch den Switch 300 gemäß dem Standard IEEE 802.1X und das erste Gerät 100 übermittelt zur Authentisierung ein Gerätezertifikat nach dem Standard X.509 (siehe RFC 5280).

Die zusätzlichen MAC-Adressen 121, 122 und zweite MAC-Adresse 112 des ersten Gerätes 100 lassen sich über eine Erweiterung "SubjectAltName" gemäß RFC 5280 über einen Eintrag "other name" realisieren, wobei man hier bei der Namensgebung einen großen Freiheitsgrad hat, und eine Liste der zusätzlichen MAC-Adressen 121, 122 oder der zweiten MAC-Adresse 112 hinterlegen kann. Das erste Gerät 100 legt hierzu eine Liste aller MAC-Adressen zu seinen Netzwerkschnittstellen an.
Es ist ferner denkbar, auch die erste MAC-Adresse 111 in "SubjectAltName" zu beschreiben, d.h. die logische Trennung zwischen Identitätsbereich 510 und erweitertem Identitätsbereich 520 kann technisch auch durch einen gemeinsamen Eintrag realisiert werden.

Das zweite Gerät 200 übermittelt zur Authentifizierung ein Attributzertifikat nach X.509, in dessen Erweiterung mit Hilfe eines Platzhalters ein Bereich von Adressen als "other name" angegeben wird, für welchen die Authentifizierung zugleich erfolgen soll. Der Platzhalter, auch als Wildcard bezeichnet, ermöglicht es dabei, dass ein Adressbereich bestimmter oder unbestimmter Länge beliebig lauten darf und dennoch bei einer Anfrage auf Zugriff auf das Netzwerk 400 durch das zweite Gerät 200 über einen als zusätzliche MAC-Adresse Zweitgerät ausgebildeten zusätzlichen Identifikator Zweitgerät 221, 222, 212, der im durch den Platzhalter umfassten Bereich liegt, keine weitere Authentifizierung nötig ist. Das zweite Gerät 200 übergibt hierzu die erste MAC-Adresse Zweitgerät 211 in der Form, dass nur die Herstellerbytes und ein Geräteidentifikator explizit angegeben werden, wohingegen das letzte Byte oder die Endung über einen Platzhalter offen gehalten wird:
00-30-05-5A-DB-*

Dies kann getrennt einzeln für die virtuellen und physikalischen Netzwerkschnittstellen erfolgen, wobei durch eine zu einer virtuellen Netzwerkschnittstelle gehörende MAC-Adresse mit Platzhalter zusätzliche MAC-Adressen Zweitgerät 221, 222 umfasst werden und durch eine zu einer physikalischen Netzwerkschnittstelle gehörende MAC-Adresse mit Platzhalter - mit abweichenden Geräteidentifikator-Bytes - eine zweite MAC-Adresse Zweitgerät 212 umfasst wird.

Das Verfahren ist neben der Verwendung für die Authentifizierung gemäß dem Standard IEEE 802.1X ferner geeignet für eine auf einer Internet-Protokoll-Verbindung basierenden Authentifizierung. Diese findet beispielsweise im Rahmen von Netzwerkzugangs-Authentifizierung über Protocol for Carrying Authentication for Network Access (PANA) gemäß Request for Comment 5191 (RFC 5191) statt. In einem Schichtenmodell wie beispielsweise dem Open Systems Interconnection Reference Model (OSI-Schichtenmodell) betrachtet geschieht die Authentifizierung über PANA auf einer höheren Ebene als über IEEE 802.1X, wobei die übermittelten Informationen, wie insbesondere die in den Ausführungsbeispielen beschriebenen Identifikatoren, analog zur Verarbeitung gemäß IEEE 802.1X auf der Vermittlungsschicht verarbeitet werden.

Das erste Gerät 100 sowie die Vermittlungsstelle 300 können in Software, Hardware oder in einer Kombination aus Soft- und Hardware realisiert und ausgeführt werden.

So können die durch die Einheiten realisierten Schritte als Programm-Code auf einem Speichermedium, insbesondere einer Festplatte, CD-ROM oder einem Speichermodul abgelegt sein, wobei die einzelnen Anweisungen des Programm-Codes von mindestens einer Recheneinheit des ersten Gerätes 100 und/oder der Vermittlungsstelle 300, umfassend einen Prozessor, ausgelesen und verarbeitet werden.

Der Prozessor ist mit dem Speichermedium über einen Bus zum Datenaustausch verbunden.

Ferner kann eine Ein-Ausgabe Einheit über den Bus angeschlossen werden, wobei mittels der Ein-Ausgabe Einheit Daten, wie beispielsweise Nachrichten, empfangen und/oder versendet werden können.

Die beschriebenen Ausführungsformen, Weiterbildungen und Ausführungsbeispiele lassen sich frei miteinander kombinieren.

## Patentansprüche

1. Verfahren zur Authentifizierung eines ersten Gerätes (100) durch eine Vermittlungsstelle (300) innerhalb eines Netzwerkes (400),
- wobei das erste Gerät (100) in einem Identitätsbereich (510) einer Datenstruktur (500) einen ersten Identifikator (111) an die Vermittlungsstelle (300) übermittelt,
- wobei das erste Gerät (100) in einem erweiterten Identitätsbereich (520) der Datenstruktur (500) mindestens einen zusätzlichen Identifikator (112, 121, 122) an die Vermittlungsstelle (300) übermittelt, und
- wobei die Vermittlungsstelle (300) das erste Gerät (100) in Abhängigkeit von dem übermittelten ersten Identifikator (111) und dem übermittelten zusätzlichen Identifikator (112, 121, 122) authentifiziert und das erste Gerät in einem einmaligen Authentifizierungsprozess für den Zugriff auf das Netzwerk von mehreren Netzwerkschnittstellen aus, die durch die Identifikatoren (111, 112, 121, 122) spezifiziert sind, authorisiert.

2. Verfahren nach Anspruch 1, wobei das erste Gerät (100) als ersten Identifikator (111) eine zu einer physikalischen Netzwerkschnittstelle gehörende erste Media-Access-Control-Adresse (111) übermittelt und als zusätzlichen Identifikator (112, 121, 122) mindestens eine zu einer virtuellen Netzwerkschnittstelle gehörende zusätzliche Media-Access-Control-Adresse (121, 122) oder eine zur physikalischen Netzwerkschnittstelle gehörende zweite Media-Access-Control-Adresse (112) übermittelt.

3. Verfahren nach Anspruch 2, wobei die Datenstruktur (500) als ein Zertifikat ausgestaltet ist, in welchem mindestens eine zusätzliche Media-Access-Control-Adresse (121, 122) oder zweite Media-Access-Control-Adresse (112) im erweiterten Identitätsbereich (520) mit Hilfe eines Platzhalters angegeben wird.

4. Verfahren nach Anspruch 2 oder 3, wobei mindestens eine zusätzliche Media-Access-Control-Adresse (121, 122) oder zweite Media-Access-Control-Adresse (112) dadurch erzeugt wird, dass ein Herstelleridentifikator innerhalb einer ersten Media-Access-Control-Adresse (111) mittels einer Maske ersetzt wird.

5. Verfahren nach Anspruch 1, wobei die Datenstruktur (500) als Zertifikat ausgestaltet ist, in welchem
im erweiterten Identitätsbereich (520)
als zusätzlicher Identifikator (112, 121, 122) eine InternetProtocol-Adresse übermittelt wird, welche eine zusätzliche Media-Access-Control-Adresse (121, 122) oder zweite Media-Access-Control-Adresse (112) als Bestandteil hat.

6. Verfahren nach einem der vorstehenden Ansprüche, wobei die Datenstruktur (500) als ein Gerätezertifikat oder ein Attributzertifikat ausgebildet ist.

7. Verfahren nach einem der vorstehenden Ansprüche, wobei die Datenstruktur (500) als ein Gerätezertifikat oder ein Attributzertifikat ausgebildet ist, das durch die Signatur einer vertrauenswürdigen Zertifizierungsinstanz vor Manipulationen geschützt ist.

8. Verfahren nach einem der vorstehenden Ansprüche, wobei mindestens ein zweites Gerät (200) innerhalb des Netzwerkes (400) in den Verfahrensschritten gemäß einem der Ansprüche 1 bis 7 durch die Vermittlungsstelle (300) authentifiziert wird.

9. Verfahren nach einem der vorstehenden Ansprüche, wobei nach erfolgreicher Authentifizierung des ersten Gerätes (100) durch die Vermittlungsstelle (300) dem ersten Gerät (100) ein Zugriff auf das Netzwerk (400) durch die Vermittlungsstelle (300) gewährt wird.

10. Verfahren nach einem der Ansprüche 8 oder 9, wobei nach erfolgreicher Authentifizierung eines zweiten Gerätes (200) durch die Vermittlungsstelle (300) dem zweiten Gerät (200) ein Zugriff auf das Netzwerk (400) durch die Vermittlungsstelle (300) gewährt wird.

11. Erstes Gerät (100) zur Authentifizierung innerhalb eines Netzwerkes (400),
- wobei das erste Gerät (100) derart ausgebildet ist, in einem Identitätsbereich (510) einer Datenstruktur (500) einen ersten Identifikator (111) an eine Vermittlungsstelle (300) zu übermitteln, und
- wobei das erste Gerät (100) derart ausgebildet ist, in einem erweiterten Identitätsbereich (520) der Datenstruktur (500) mindestens einen zusätzlichen Identifikator (112, 121, 122) an die Vermittlungsstelle (300) zu übermitteln und wobei das erste Gerät (100) derart ausgebildet ist, sich in Abhängigkeit von dem übermittelten ersten Identifikator (111) und dem übermittelten zusätzlichen Identifikator (112, 121, 122) zu authentifizieren,
wobei das erste Gerät (100) derart ausgebildet ist, in einem einmaligen Authentifizierungsprozess den Zugriff auf das Netzwerk von mehreren Netzwerkschnittstellen aus, die durch die Identifikatoren (111, 112, 121, 122) spezifiziert sind, zu bekommen.

12. Vermittlungsstelle (300), wobei die Vermittlungsstelle (300) derart ausgebildet ist, ein erstes Gerät in Abhängigkeit von einem vom ersten Gerät (100) übermittelten ersten Identifikator (111) in einem Identitätsbereich (510) einer Datenstruktur (500) und mindestens einem vom ersten Gerät (100) übermittelten zusätzlichen Identifikator (112, 121, 122) in einem erweiterten Identitätsbereich (520) der Datenstruktur (500) zu authentisieren und das erste Gerät in einem einmaligen Authentifizierungsprozess für den Zugriff auf das Netzwerk von mehreren Netzwerkschnittstellen aus, die durch die Identifikatoren (111, 112, 121, 122) spezifiziert sind, zu autorisieren.

## Claims

1. Method for authenticating a first device (100) by a switching centre (300) inside a network (400),
- the first device (100) transmitting a first identifier (111) to the switching centre (300) in an identity region (510) of a data structure (500),
- the first device (100) transmitting at least one additional identifier (112, 121, 122) to the switching centre (300) in an extended identity region (520) of the data structure (500), and
- the switching centre (300) authenticating the first device (100) on the basis of the transmitted first identifier (111) and the transmitted additional identifier (112, 121, 122) and authorizing the first device to access the network from a plurality of network interfaces, which are specified by the identifiers (111, 112, 121, 122), in a one-off authentication process.

2. Method according to Claim 1, the first device (100) transmitting a first media access control address (111) belonging to a physical network interface as the first identifier (111) and transmitting at least one additional media access control address (121, 122) belonging to a virtual network interface or a second media access control address (112) belonging to the physical network interface as the additional identifier (112, 121, 122).

3. Method according to Claim 2, the data structure (500) being in the form of a certificate in which at least one additional media access control address (121, 122) or a second media access control address (112) is indicated in the extended identity region (520) with the aid of a placeholder.

4. Method according to Claim 2 or 3, at least one additional media access control address (121, 122) or a second media access control address (112) being produced by replacing a manufacturer identifier inside a first media access control address (111) by means of a mask.

5. Method according to Claim 1, the data structure (500) being in the form of a certificate in which an Internet protocol address, which has an additional media access control address (121, 122) or a second media access control address (112) as a component, is transmitted as the additional identifier (112, 121, 122) in the extended identity region (520).

6. Method according to one of the preceding claims, the data structure (500) being in the form of a device certificate or an attribute certificate.

7. Method according to one of the preceding claims, the data structure (500) being in the form of a device certificate or an attribute certificate which is protected from manipulation by the signature of a trusted certification authority.

8. Method according to one of the preceding claims, at least one second device (200) inside the network (400) being authenticated by the switching centre (300) in the method steps according to one of Claims 1 to 7.

9. Method according to one of the preceding claims, the first device (100) being granted access to the network (400) by the switching centre (300) after the first device (100) has been successfully authenticated by the switching centre (300).

10. Method according to either of Claims 8 and 9, a second device (200) being granted access to the network (400) by the switching centre (300) after the second device (200) has been successfully authenticated by the switching centre (300).

11. First device (100) for authentication inside a network (400),
- the first device (100) being designed to transmit a first identifier (111) to a switching centre (300) in an identity region (510) of a data structure (500), and
- the first device (100) being designed to transmit at least one additional identifier (112, 121, 122) to the switching centre (300) in an extended identity region (520) of the data structure (500) and
the first device (100) being designed to be authenticated on the basis of the transmitted first identifier (111) and the transmitted additional identifier (112, 121, 122),
the first device (100) being designed to obtain access to the network from a plurality of network interfaces, which are specified by the identifiers (111, 112, 121, 122) in a one-off authentication process.

12. Switching centre (300), the switching centre (300) being designed to authenticate a first device on the basis of a first identifier (111) transmitted by the first device (100) in an identity region (510) of a data structure (500) and at least one additional identifier (112, 121, 122) transmitted by the first device (100) in an extended identity region (520) of the data structure (500) and to authorize the first device to access the network from a plurality of network interfaces, which are specified by the identifiers (111, 112, 121, 122), in a one-off authentication process.

## Revendications

1. Procédé d'authentification d'un premier appareil (100) au moyen d'un centre de commutation (300) dans un réseau (400),
- le premier appareil (100) transmettant, dans une zone d'identité (510) d'une structure de données (500), un premier identificateur (111) au centre de commutation (300),
- le premier appareil (100) transmettant, dans une zone d'identité élargie (520) de la structure de données (500), au moins un identificateur supplémentaire (112, 121, 122) au centre de commutation (300) et
- le centre de commutation (300) authentifiant le premier appareil (100) en fonction du premier identificateur transmis (111) et de l'identificateur supplémentaire transmis (112, 121, 122) et autorisant le premier appareil dans un processus d'authentification unique pour l'accès au réseau depuis plusieurs interfaces réseau qui sont spécifiées par les identificateurs (111, 112, 121, 122).

2. Procédé selon la revendication 1, le premier appareil (100) transmettant, en tant que premier identificateur (111), une première adresse Media Access Control (111) faisant partie d'une interface réseau physique et, en tant qu'identificateur supplémentaire (112, 121, 122), au moins une adresse Media Access Control supplémentaire (121, 122) faisant partie d'une interface réseau virtuelle ou une deuxième adresse Media Access Control (112) faisant partie de l'interface réseau physique.

3. Procédé selon la revendication 2, la structure de données (500) se présentant sous la forme d'un certificat dans lequel est indiquée au moins une adresse Media Access Control supplémentaire (121, 122) ou une deuxième adresse Media Access Control (112) dans la zone d'identité élargie (520) à l'aide d'un substitut.

4. Procédé selon la revendication 2 ou 3, au moins une adresse Media Access Control supplémentaire (121, 122) ou une deuxième adresse Media Access Control (112) étant générée par remplacement d'un identificateur de fabricant par un masque dans une première adresse Media Access Control (111).

5. Procédé selon la revendication 1, la structure de données (500) se présentant sous la forme d'un certificat dans lequel est transmise, dans la zone d'identité élargie (520), en tant qu'identificateur supplémentaire (112, 121, 122), une adresse de protocole internet qui comporte, en tant que partie constitutive, une adresse Media Access Control supplémentaire (121, 122) ou une deuxième adresse Media Access Control (112).

6. Procédé selon l'une des revendications précédentes, la structure de données (500) étant réalisée en tant que certificat d'appareil ou certificat d'attribut.

7. Procédé selon l'une des revendications précédentes, la structure de données (500) étant réalisée en tant que certificat d'appareil ou certificat d'attribut qui est protégé contre les manipulations par la signature d'une instance de certification fiable.

8. Procédé selon l'une des revendications précédentes, au moins un deuxième appareil (200) étant authentifié dans le réseau (400) dans les étapes de procédé selon l'une des revendications 1 à 7 par le centre de commutation (300).

9. Procédé selon l'une des revendications précédentes, un accès au réseau (400) étant accordé au premier appareil (100) par le centre de commutation (300) après l'authentification réussie du premier appareil (100).

10. Procédé selon l'une des revendications 8 ou 9, un accès au réseau (400) étant, après l'authentification réussie d'un deuxième appareil (200), accordé au deuxième appareil (200) par le centre de commutation (300).

11. Premier appareil (100) pour une authentification dans un réseau (400),
- le premier appareil (100) étant réalisé de manière à transmettre, dans une zone d'identité (510) d'une structure de données (500), un premier identificateur (111) à un centre de commutation (300) et
- le premier appareil (100) étant réalisé de manière à transmettre, dans une zone d'identité élargie (520) de la structure de données (500), au moins un identificateur supplémentaire (112, 121, 122) au centre de commutation (300) et
- le premier appareil (100) étant réalisé pour s'authentifier en fonction du premier identificateur transmis (111) et de l'identificateur supplémentaire transmis (112, 121, 122),
- le premier appareil (100) étant réalisé de manière à obtenir, dans un processus d'authentification unique, l'accès au réseau depuis plusieurs interfaces réseau qui sont spécifiées par les identificateurs (111, 112, 121, 122).

12. Centre de commutation (300), le centre de commutation (300) étant réalisé de manière à authentifier un premier appareil en fonction d'un premier identificateur (111) transmis par le premier appareil (100) dans une zone d'identité (510) d'une structure de données (500) et d'au moins un identificateur supplémentaire (112, 121, 122) transmis par le premier appareil (100) dans une zone d'identité élargie (520) de la structure de données (500) et pour autoriser le premier appareil dans un processus d'authentification unique pour l'accès au réseau depuis plusieurs interfaces réseau qui sont spécifiées par les identificateurs (111, 112, 121, 122).
